# EUROPÄISCHE PATENTANMELDUNG

(11) **EP 0 911 540 A2**
(43) Veröffentlichungstag der Anmeldung: **28.04.1999**
(21) Anmeldenummer: 98117303.2
(22) Anmeldetag: 12.09.1998
(51) Int. Cl.: F16H 7/12, F16H 9/14, F02B 67/06

(54) **Riemenantrieb mit stufenlos variabler Übersetzung für die Hilfsaggregate einer Brennkraftmaschine**

(30) Priorität: 16.10.1997 DE 19745735
(71) Anmelder: Bayerische Motoren Werke Aktiengesellschaft, 80788 München (DE)
(72) Erfinder: Kern, Josef, 82223 Eichenau (DE)

(57) **Zusammenfassung**

Die Erfindung betrifft einen Hilfsaggregate-Antrieb, insbesondere für eine Brennkraftmaschine, mit variabler Übersetzung, wobei ein Antriebsriemen über eine in ihrem wirksamen Durchmesser variable Antriebs-Riemenscheibe, weiterhin über ein unterschiedlich positionierbares Spannrollensystem, mit Hilfe dessen die gewünschte Übersetzung einstellbar ist, sowie über zumindest eine einem Hilfsaggregat zugeordnete Abtriebs-Riemenscheibe geführt ist. Erfindungsgemäß besteht das Spannrollensystem aus zwei Spannrollen, zwischen denen der Antriebsriemen hindurch geführt ist, wobei die beiden Spannrollen auf einer Tragplatte angeordnet sind, die in einer zur Antriebsriemen-Ebene parallelen Ebene verdrehbar ist. Die Tragplatte kann ein Zahnradsegment tragen, welches mit einem Ritzel eines elektrischen Stellmotors kämmt. Ferner greift an der Tragplatte ein im wesentlichen die Riemenspannung abstützendes Federelement an.

## Beschreibung

Die Erfindung betrifft einen Hilfsaggregate-Antrieb, insbesondere für eine Brennkraftmaschine, mit variabler Übersetzung, wobei ein Antriebsriemen über eine in ihrem wirksamen Durchmesser variable Antriebs-Riemenscheibe, weiterhin über ein unterschiedlich positionierbares Spannrollensystem, mit Hilfe dessen die gewünschte Übersetzung einstellbar ist, sowie über zumindest eine einem Hilfsaggregat zugeordnete Abtriebs-Riemen-scheibe geführt ist. Zum technischen Umfeld wird beispielshalber auf die EP 0 586 534 B1 verwiesen.

Ein Hilfsaggregate-Antrieb einer Brennkraftmaschine mit variabler Übersetzung hat immense Vorteile hinsichtlich Wirkungsgrad und Komfort. Die Hilfsaggregate können dann nämlich unabhängig von der aktuellen Brennkraftmaschinen-Drehzahl stets mit derjenigen Drehzahl angetrieben werden, die weitgehend deren Leistungsanforderung entspricht. Überschußleistung wird von den Hilfsaggregaten dann nicht mehr erzeugt, so daß deren Leistungsaufnahme insbesondere bei hohen Brennkraftmaschinen-Drehzahlen geringer ist. Ferner kann die Brennkraftmaschine im Leerlaufbetrieb mit niedrigeren Drehzahlen als bisher üblich betrieben werden, da durch geeignete Wahl des Übersetzungsverhältnisses stets eine ausreichende Hilfsaggregate-Drehzahl einstellbar ist.

Ein besonders vorteilhafter Hilfsaggregate-Antrieb mit variabler Übersetzung arbeitet mit einem an sich bekannten sog. Verstellpulley, wie er auch in den CVT-Getrieben Verwendung findet. Der Antriebsriemen des Hilfsaggregate-Antriebs läuft hierbei über eine verstellbare Antriebs-Riemenscheibe, bei der die Riemen- oder Scheibenabstützungen axial gegeneinander verstellbar sind. Ein derartiges System für einen variablen Hilfsaggregate-Antrieb ist beispielsweise in der oben genannten EP 0 586 534 B1 gezeigt, dabei kann als Verstellpulley - ebenso wie in der vorliegenden Erfindung - ein sog. passiver Variator zum Einsatz kommen. Dabei wird die Anpreßkraft, mit der die beiden Riemenscheibenhälften dieses passiven Variators gegen den zwischen ihnen geführten Antriebsriemen gepreßt werden, durch ein Federelement erzeugt, wobei zusätzlich nockengesteuert eine drehmomentabhängige Anpressung über eine Drehmomentrampe vorgesehen sein kann.

Kommt an einem Hilfsaggregate-Antrieb mit variabler Übersetzung, insbesondere für eine Brennkraftmaschine, ein soeben kurz beschriebener passiver Variator zum Einsatz, so wird üblicherweise das aktuelle Übersetzungsverhältnis mit Hilfe eines unterschiedlich positionierbaren Spannrollensystemes eingestellt. Die bereits genannte EP 0 586 534 B1 zeigt eine derartige Anordnung mit einer Spannrolle, die mit Hilfe eines Verstellmotors entweder rotatorisch oder translatorisch verschiebbar ist. In Abhängigkeit von der jeweiligen Position der Spannrolle, über welche der Antriebsriemen geführt ist, ergibt sich somit eine unterschiedliche Übersetzung im Hilfsaggregate-Antrieb.

Dabei läßt sich mit einer translatorischen Verschiebung das Übersetzungsverhältnis in weitem Umfang variieren, jedoch beansprucht eine Anordnung mit einer translatorisch verschiebbaren Spannrolle relativ viel Bauraum. Eine kompaktere Anordnung ergibt sich mit einem rotatorisch unterschiedlich positionierbaren Spannrollensystem, jedoch muß hier die Spannrolle über einen relativ großen Winkelbereich verdreht werden, um die gewünschte breite Variation im Hinblick auf die unterschiedlichen Übersetzungsverhältnisse zu erzielen.

Aufgabe der Erfindung ist es daher, an einen Hilfsaggregate-Antrieb nach dem Oberbegriff des Anspruchs 1 Maßnahmen aufzuzeigen, mit Hilfe derer bei relativ geringem Verstellweg des Spannrollensystemes eine breite Variation des Übersetzungsverhältnisses möglich ist.

Die Lösung dieser Aufgabe ist dadurch gekennzeichnet, daß das Spannrollensystem aus zwei Spannrollen besteht, zwischen denen der Antriebsriemen hindurch geführt ist, wobei die beiden Spannrollen auf einer Tragplatte angeordnet sind, die in einer zur Antriebsriemen-Ebene parallelen Ebene verdrehbar ist. Vorteilhafte Aus- und Weiterbildungen sind Inhalt der Unteransprüche.

Erfindungsgemäß sind zwei in der Antriebsriemen-Ebene nebeneinander angeordnete Spannrollen vorgesehen, zwischen denen der Antriebsriemen hindurchgeführt ist. Werden nun diese beiden Spannrollen in der Antriebsriemen-Ebene verdreht, so ist die Weglänge des Antriebsriemens über dieses Spannrollensystem über einen großen Bereich variierbar, was eine dementsprechend große Variationsmöglichkeit für das Übersetzungsverhältnis zur Folge hat. In einer ersten Position des Spannrollensystemes kann nämlich der Riemen quasi geradlinig zwischen den beiden Spannrollen hindurchgeführt werden, während in einer zweiten Extremposition des Spannrollensystems der Riemen bezüglich der beiden Spannrollen jeweils einen großen Umschlingungswinkel aufweist, so daß hierdurch die Riemenlänge im Bereich dieses Spannrollensystemes deutlich vergrößert wird.

Dies sowie weitere Vorteile und Merkmale der vorliegenden Erfindung geht auch aus der vorliegenden Erläuterung eines bevorzugten Ausführungsbeispieles hervor, das in den beigefügten Figuren dargestellt ist. Im einzelnen zeigt
- Fig. 1a: die Stirnansicht eines erfindungsgemäßen Brennkraftmaschinen-Hilfsaggregate-Antriebes in einer ersten Extremposition des Spannrollensystemes, wobei ein großes Übersetzungsverhältnis eingestellt ist,
- Fig. 1b: diese Ansicht in der zweiten Extremposition des Spannrollensystemes mit einer kleinen Übersetzung,
- Fig. 2: in einer Prinzipdarstellung den Aufbau des Spannrollensystemes,
- Fig. 3a: ein erstes Ausführungsbeispiel des Antriebsriemens im Querschnitt,
- Fig. 3b: ein zweites Ausführungsbeispiel des Antriebsriemens im Querschnitt, sowie die
- Fig. 4a bis 4d: jeweils Längsschnitte durch verschiedene Ausführungsbeispiele eines Antriebsriemens für den vorliegenden Hilfsaggregate-Antrieb.

Mit der Bezugsziffer 1 ist eine Brennkraftmaschine der V-Bauart (selbstverständlich nur beispielsweise) bezeichnet, an welcher der erfindungsgemäße Hilfsaggregate-Antrieb 2 vorgesehen ist. Die einzelnen Hilfsaggregate der Brennkraftmaschine 1 sind nicht näher dargestellt, gezeigt sind hier lediglich deren sog. Abtriebs-Riemenscheiben 3a bis 3d. Über diese Abtriebs-Riemenscheiben 3a, 3b, 3c, 3d, über die ein Antriebsriemen 4 geführt ist, werden die Brennkraftmaschinen-Hilfsaggregate, bei denen es sich wie bspw. um eine Wasserpumpe, eine Lenkhilfepumpe, einen Kompressor für eine Klimaanlage sowie eine Lichtmaschine handeln kann, angetrieben.

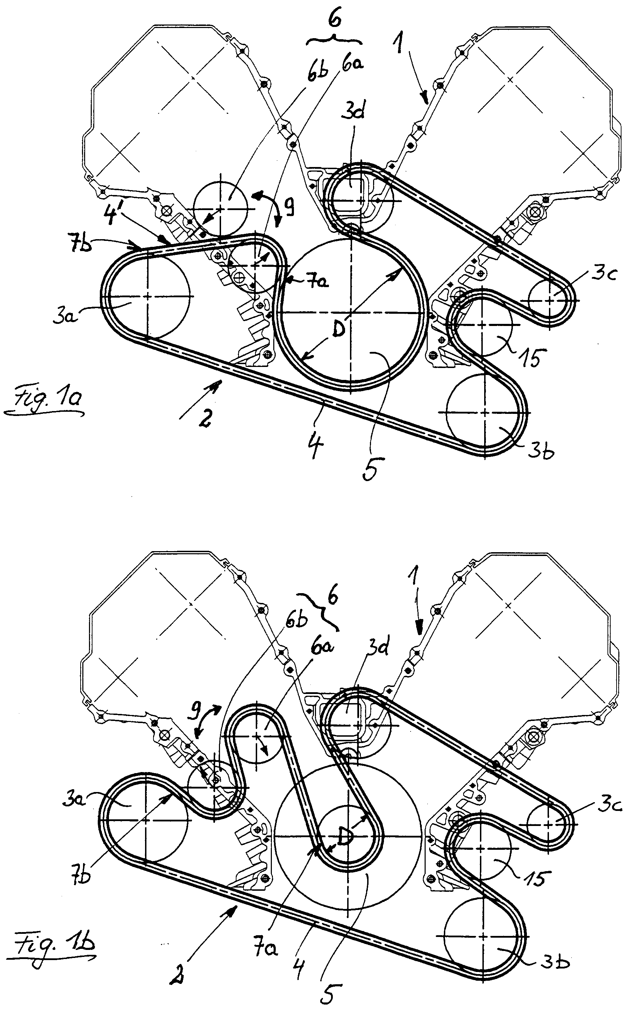

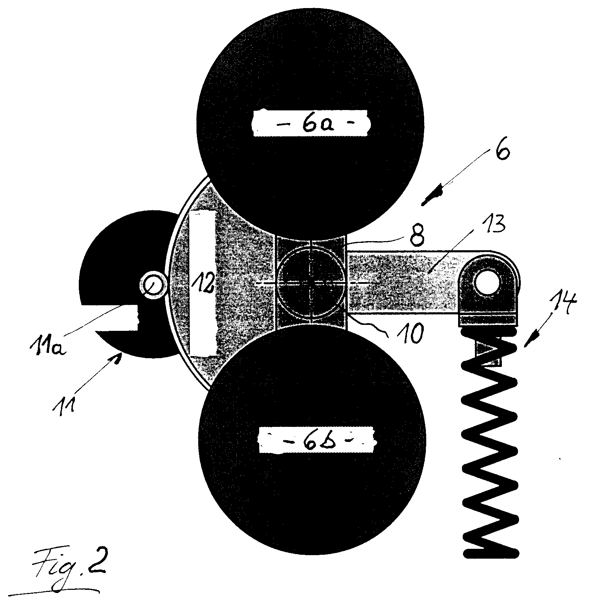

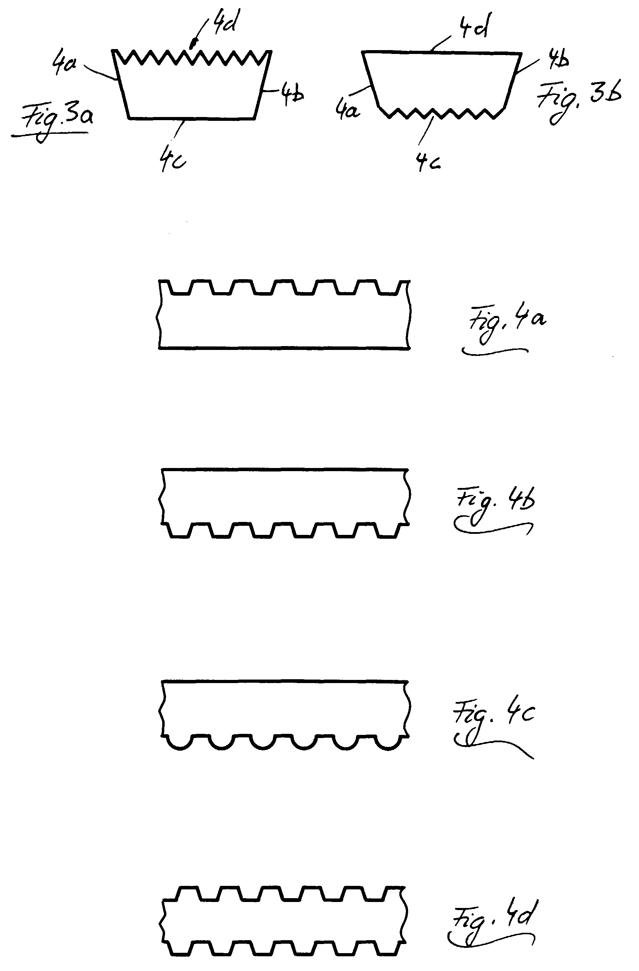

Angetrieben wird der Antriebsriemen 4 von einer Antriebs-Riemenscheibe 5, die stirnseitig auf der nicht näher bezeichneten Kurbelwelle der Brennkraftmaschine 1 sitzt, und die in ihrem wirksamen Durchmesser D variabel ist. Da der Aufbau einer derartigen variablen Antriebs-Riemenscheibe 5, die auch als Verstellpulley oder passiver Variator bezeichnet werden kann, eingangs bereits kurz erläutert wurde und im übrigen grundsätzlich bekannt ist, wird hierauf nicht näher eingegangen. Erläutert sei lediglich kurz, daß der Antriebsriemen 4 in der in ihrem wirksamen Durchmesser D variablen Antriebs-Riemenscheibe 5 mit seinen Seitenflanken 4a, 4b (vgl. Fig. 3a, 3b) unter hohem Anpreßdruck an den in axialer Richtung gegeneinander verschiebbaren nicht näher bezeichneten Riemenscheibenhälften anliegt. Hierdurch wird der Antriebsriemen 4 von der rotierenden Antriebs-Riemenscheibe 5 mitgenommen.

Die Kraftübertragung vom Antriebsriemen 4 auf die Abtriebs-Riemenscheiben 3a bis 3d (und somit der Antrieb der Hilfsaggregate) erfolgt hingegen über die Innenseite 4c oder die Außenseite 4d des Antriebsriemens 4, worauf an späterer Stelle noch kurz eingegangen wird.

Mit dem Verstellpulley bzw der in ihrem Durchmesser D variablen Antriebs-Riemenscheibe 5 ist das Übersetzungsverhältnis im Hilfsaggregate-Antrieb 2 veränderbar, wobei die Einstellung des Übersetzungsverhältnisses über ein unterschiedlich positionierbares Spannrollensystem 6 erfolgt. In Abhängigkeit von der Position dieses Spannrollensystems 6, über welches der Antriebsriemen 4 geführt ist, und welches gleichzeitig die (insbesondere im Hinblick auf die Kraftübertragung vom Antriebsriemen 4 auf die Abtriebs-Riemenscheiben 3a - 3d) erforderliche Riemenspannung des Antriebsriemens 4 abstützt, ergibt sich im Zusammenwirken mit der Antriebs-Riemenscheibe 5 an dieser jeweils ein unterschiedlicher wirksamer Durchmesser D. An dieser Stelle sei darauf hingewiesen, daß die Riemenspannung defacto vom Verstellpulley bzw. der Antriebs-Riemenscheibe 5 im Zusammenwirken mit dem Spannrollensystem 6 erzeugt wird.

Wie ersichtlich, ist zwischen den beiden Spannrollen 6a, 6b dieses Spannrollensystemes 6 der Antriebsriemen 4 hindurchgeführt. Dabei ist dieses verstellbare Spannrollensystem 6 wie hier gezeigt vorzugsweise im Leertrum des Antriebsriemens 4 zwischen der Antriebs-Riemenscheibe 5 und dem ersten benachbarten Hilfsaggregat bzw. der Abtriebs-Riemenscheibe 3a desselben angeordnet. Aus Bauraumgründen kann jedoch auch eine Anordnung an anderer Stelle günstig sein.

Für die folgende Erläuterung der Funktionsweise der vorliegenden Erfindung wird als Teilstück 4' des Antriebsriemens 4 derjenige Abschnitt des Antriebsriemens 4 bezeichnet, der über das Spannrollensystem 6 geführt ist. Dabei wird die Länge des Teilstückes 4' vom Ablaufpunkt 7a von der Antriebs-Riemenscheibe 5 bis zum Auflaufpunkt 7b auf der Abtriebs-Riemenscheibe 3a gemessen.

Befindet sich nun das Spannrollensystem 6 in der in Fig. 1a dargestellten Position, so ist die Länge des Teilstückes 4' relativ gering, was zur Folge hat, daß sich an der Antriebs-Riemenscheibe 5 ein relativ großer wirksamer Durchmesser D einstellt. Das Übersetzungsverhältnis im Hilfsaggregate-Antrieb 2 ist demzufolge relativ groß.

Befindet sich das Spannrollensystem wie in Fig. 1b dargestellt in der anderen Extremposition, so ist die über das Spannrollensystem 6 geführte Länge des Teilstückes 4' deutlich größer, so daß zum Ausgleich der wirksame Durchmesser D der Antriebs-Riemenscheibe 5 wesentlich geringer ist. Hiermit stellt sich somit ein kleines Übersetzungsverhältnis im Hilfsaggregate-Antrieb 2 ein.

Wie ersichtlich muß zur Erzielung der unterschiedlichen wirksamen Durchmesser D an der Antriebs-Riemenscheibe 5 gemäß den Fig. 1a, 1b das Spannrollensystem 6 in der Ebene des Antriebsriemens 4 lediglich um einen relativ geringen Winkel in der Größenordnung von 90° verdreht werden. Bei geringem Verstellweg sowie mit einer äußerst kompakten Anordnung läßt sich somit an einem erfindungsgemäßen Hilfsaggregate-Antrieb 2 eine breite Variation des Übersetzungsverhältnisses erzielen.

Fig. 2 zeigt prinzipiell einen vorteilhaften Aufbau des Spannrollensystemes 6, wonach die beiden Spannrollen 6a, 6b in der Ebene des Antriebsriemens 4 nebeneinander liegend und um ihre Achse verdrehbar auf einer Tragplatte 8 angeordnet sind. Diese Tragplatte 8 kann am Gehäuse der Brennkraftmaschine 1 befestigt sein, und zwar derart, daß sie gemäß Pfeilrichtung 9 in einer zur Antriebsriemen-Ebene parallelen Ebene verdrehbar ist. Beispielsweise kann die Tragplatte 8 im Mittelpunkt 10 zwischen den beiden Spannrollen 6a, 6b, drehbar am Gehäuse der Brennkraftmaschine 1 aufgehängt sein. In der Darstellung gemäß Fig. 2 ist die Tragplatte 8 somit zusammen mit den beiden Spannrollen 6a, 6b um eine zur Zeichenebene senkrechte Achse durch den Mittelpunkt 10 gemäß Pfeilrichtung 9 verdrehbar.

Initiiert wird eine derartige Verdrehbewegung der Tragplatte 8 durch einen elektrischen Stellmotor 11, dessen Antriebsritzel 11a mit einem an der Tragplatte 8 befestigten Zahnradsegment 12 kämmt. Durch geeignete Ansteuerung des Stellmotors 11 über eine nicht gezeigte Steuereinheit kann somit das Spannrollensystem 6 in die jeweils gewünschte Position gefahren werden, wobei darauf hingewiesen sei, daß anstelle eines elektrischen Stellmotors 11 auch ein anderes Betätigungsorgan zum Verschwenken bzw. Verdrehen der Tragplatte 8 gemäß Pfeilrichtung 9 zum Einsatz kommen kann.

Am Spannrollensystem 6 bzw. an der Tragplatte 8 desselben greift ferner über einen Hebelarm 13 ein Federelement 14 an, welches im wesentlichen die Riemenspannung im Antriebsriemens 4 abstützt, wie oben bereits erläutert. Über den Verstellmotor 11 muß somit im wesentlichen lediglich das zum Einstellen des gewünschten Übersetzungsverhältnisses erforderliche Rest-Drehmoment aufgebracht werden. Nach der Verstellung kann der Verstellmotor 11 durch eine nicht gezeigte Bremse festgesetzt werden, um ein dauerndes Bestromen desselben zu vermeiden, alternativ könnte jedochh auch ein selbsthemmendes Getriebe zwischen dem Verstellmotor 11 und der-Tragplatte 8 vorgesehen sein. Dabei wird das Federelement 14 bzw. dessen Federkraft bevorzugt derart dimensioniert, daß bei einem Ausfall des Stellmotors 11 selbsttätig ein kleines Übersetzungsverhältnis im variablen Hilfsaggregate-Antrieb 2 eingestellt wird, d.h. daß an der Antriebs-Riemenscheibe 5 ein relativ kleiner Durchmesser D wirksam wird. Als Folge dessen werden die Hilfsaggregate mit niedriger Drehzahl angetrieben und sind somit bei einem Ausfall des Stellmotors 11 vor Überdrehzahlen geschützt.

Als Federelement 14 kann wie hier gezeigt eine Schraubenfeder zum Einsatz kommen, die als Druckfeder oder als Zugfeder wirken kann und die sich bevorzugt an einer geeigneten Stelle des Gehäuses des Spannrollensystems 6 abstützt, daneben ist jedoch auch der Einsatz anderer üblicher Federelemente bzw. Kraftspeicherelemente möglich.

Wie bereits erwähnt, kommt bevorzugt ein Antriebsriemen 4 zum Einsatz, der sowohl über seine Seitenflanken 4a, 4b als auch über seine Innenseite 4c oder seine Außenseite 4d die erforderlichen Kräfte übertragen kann. Wirksam werden die beiden Seitenflanken 4a, 4b (vgl. Fig. 3a, 3b) an der Antriebs-Riemenscheibe 5, da hier das Drehmoment der beiden in axialer Richtung gegeneinander verschiebbaren Riemenscheibenhälften auf den Antriebsriemen 4 über dessen Seitenflanken 4a, 4b übertragen werden. Hingegen überträgt der Antriebsriemen 4 das Drehmoment auf die Abtriebs-Riemenscheiben 3a bis 3d der Hilfsaggregate entweder über seine Innenseite 4c oder seine Außenseite 4d. Mit der Außensseite 4d wird der Antriebsriemen 4 im übrigen auch über eine weitere im Hilfsaggregate-Antrieb 2 vorgesehene Umlenkrolle 15 geführt (vgl. Fig. 1a, 1b).

Der Antriebsriemen 4 selbst kann als im Querschnitt trapezförmiger Poly-V-Riemen oder Zahnriemen ausgebildet sein, wobei dessen Verzahnungen an der Innenseite 4c und/oder an der Außenseite 4d vorgesehen sein können, wie dies in den Fig. 4a bis 4d dargestellt ist. Jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Brennkraftmaschine
- 2: Hilfsaggregate-Antrieb
- 3a,3b: Abtriebs-Riemenscheibe eines Hilfsaggregates
- 3c,3d: Abtriebs-Riemenscheibe eines Hilfsaggregates
- 4: Antriebsriemen
- 4': Teilstück von 4 im Bereich von 6
- 4a,4b: Seitenflanken von 4
- 4c: Innenseite von 4
- 4d: Außenseite von 4
- 5: Antriebs-Riemenscheibe
- D: wirksamer Durchmesser von 5
- 6: Spannrollensystem (zur Einstellung des Übersetzungsverhältnisses)
- 6a,6b: Spannrollen von 6
- 7a: Ablaufpunkt des Antriebsriemens 4 von 5
- 7b: Auflaufpunkt des Antriebsriemens 4 auf 3a
- 8: Tragplatte von 6, die 6a, 6b trägt
- 9: Pfeilrichtung
- 10: Mittelpunkt
- 11: elektrischer Stellmotor
- 11a: Antriebsritzel von 11
- 12: Zahnradsegment, an 8 befestigt
- 13: Hebelarm für 14
- 14: Federelement
- 15: Umlenkrolle

## Patentansprüche

1. Hilfsaggregate-Antrieb, insbesondere für eine Brennkraftmaschine (1), mit variabler Übersetzung, wobei ein Antriebsriemen (4) über eine in ihrem wirksamen Durchmesser (D) variable Antriebs-Riemenscheibe (5), weiterhin über ein unterschiedlich positionierbares Spannrollensystem (6), mit Hilfe dessen die gewünschte Übersetzung einstellbar ist, sowie über zumindest eine einem Hilfsaggregat zugeordnete Abtriebs-Riemenscheibe (3a - 3d) geführt ist,
dadurch gekennzeichnet, daß das Spannrollensystem (6) aus zwei Spannrollen (6a, 6b) besteht, zwischen denen der Antriebsriemen (4) hindurch geführt ist, wobei die beiden Spannrollen (6a, 6b) auf einer Tragplatte (8) angeordnet sind, die in einer zur Antriebsriemen-Ebene parallelen Ebene verdrehbar ist.

2. Hilfsaggregate-Antrieb nach Anspruch 1,
dadurch gekennzeichnet, daß die Tragplatte (8) ein Zahnradsegment (12) trägt, welches mit einem Ritzel (11a) eines elektrischen Stellmotors (11) kämmt.

3. Hilfsaggregate-Antrieb nach Anspruch 1 oder 2,
dadurch gekennzeichnet, daß an der Tragplatte (8) ein im wesentlichen die Riemenspannung abstützendes Federelement (14) angreift.

4. Hilfsaggregate-Antrieb nach einem der vorangegangenen Ansprüche,
dadurch gekennzeichnet, daß der Antriebsriemen (4) in der in ihrem wirksamen Durchmesser (D) variablen Antriebs-Riemenscheibe (5) mit seinen Seitenflanken an den in axialer Richtung gegeneinander verschiebbaren Riemenscheibenhälten unter Anpreßdruck anliegt, während die Kraftübertragung vom Antriebsriemen (4) auf die Abtriebs-Riemenscheibe(n) (3a - 3d) über die Innenseite (4c) oder Außenseite (4d) des Antriebsriemens (4) erfolgt.

5. Hilfsaggregate-Antrieb nach einem der vorangegangenen Ansprüche,
dadurch gekennzeichnet, daß der Antriebsriemen (4) als im Querschnitt trapezförmiger Poly-V-Riemen oder Zahnriemen ausgebildet ist.
